# EUROPEAN PATENT APPLICATION

(11) **EP 1 081 662 A2**
(43) Date of publication of application: **07.03.2001**
(21) Application number: 00106626.5
(22) Date of filing: 28.03.2000
(51) Int. Cl.: G07F 7/08, G07C 9/00

(54) **Electronic payment system**

(30) Priority: 30.08.1999 JP 24254399
(71) Applicant: Oki Electric Industry Co., Ltd., Tokyo (JP)
(72) Inventor: Takizawa, Toshio, c/o Oki Electric Industry Co.Ltd, Tokyo (JP)
(74) Representative: Betten & Resch

(57) **Abstract**

Iris data of customers is previously registered with an iris certificate authority (120). When a customer is going to pay for a purchase, a server (132) of a shop (130) transmits iris data of the customer to the iris certificate authority (120) and request it to check the authenticity of the customer. The iris certificate authority carries out authentication, and if an approval notification that the customer is a very person registered in advance, electronic money for a purchase price of an article is withdrawn from an electronic safe (160-1) in a consumer server (140), and electronic money for the purchase price is transferred to an electronic safe (160-2) in a shop server (150).

## Description

### BACKGROUND OF THE INVENTION

### 1. Field of the Invention

The present invention relates to an electronic payment system which settles an account by authenticating a customer by biometric information about the irises, for example, of human eyes.

### 2. Description of the Related Art

These days, when payments are made for the prices of articles at shops, means of payment range from cash, credit cards issued by credit card companies to debit cards issued by banks and IC cards holding electronic money. The electronic payment system makes a sale transaction finished by electronic money that carries electronic information instead of monetary value. Above all, credit cards and debit cards have found growing use.

When payment is made by a credit card at the check-out counter, the customer's card information and information about the price for a purchased article are transferred from a credit card to a host computer. The credit card receives authorization by the host computer and thus the validity of the card is conformed.

Then, the signature that the customer writes is compared with the signature on the back of the card, and a decision is made whether or not the card is the customer's own, and thus the account is settled.

When payment is made by a debit card, the customer enters his personal identity number, on the basis of which the authenticity of the customer is checked, and when the authenticity is conformed, the money for the purchased article is withdrawn from his bank account.

In a conventional electronic payment system, such as mentioned above, it is sometimes difficult to correctly determine the authenticity of a credit card or the like. Signatures are difficult to authenticate and personal identity numbers can be made out by analogy. They are reliable means for authentication of the customer, and it is difficult to prevent frauds.

In recent years, the Internet has spread widely and it has become possible to buy things through the cyber space, but there are cases where a hacker steals information and pretends to be an authentic person. To step up security to prevent frauds, a high performance system is required, and such a system may pose operational problems.

In a case where a credit card is used, the customer has to carry a credit card whenever he pays for his purchases, which is inconvenient. Therefore, the object of the present invention is to provide a simple-structured system, which enables secure authentication of the customer and electronic payment while guaranteeing security.

### SUMMARY OF THE INVENTION

To solve the above problems, the present invention adopts the following configurations.

According to a first aspect of an electronic payment system of the present invention, the electronic payment system is located between a seller and a customer to settle an account regarding a purchase price for an article on a communication line and comprises a biometric certificate authority where biometric information about the customer has been stored; a terminal for requesting payment for asking the customer for payment in electronic money as a purchase price for the article; a seller's money managing server for storing the seller's electronic money in an electronic safe for the seller and managing the electronic money; and a customer's money managing server for storing the customer's electronic money and managing the electronic money, wherein the terminal for requesting the biometric certificate authority to confirm the authenticity of the customer by submitting biometric information collected when the customer purchased the article and, on receiving a certification notification from the biometric certificate authority by return, requesting the customer's money managing server to remit electronic money as the purchase price to the seller's money managing server, wherein the biometric certificate authority, when receiving a request from the payment-requesting terminal to authenticate a customer, confirms the authenticity of the customer by checking whether or not the customer is a very person registered with the biometric certificate authority based on biometric information received and biometric information stored in advance and, after having confirmed that the customer is a person who has been registered with the biometric certificate authority, sends a certification notification to the payment-requesting terminal, and wherein the customer's money managing server, when receiving a request from the terminal for requesting payment to remit electronic money to the seller's money managing server, withdraws electronic money from the customer's electronic safe and transfers electronic money as the purchase price to the seller's money managing server.

According to a second aspect of the electronic payment system of the present invention, the electronic payment system further comprises a biometric information acquisition unit for collecting biometric information about the customer and sending the information to the biometric certificate authority and the terminal for requesting payment.

According to a third aspect of the present invention, in the electronic payment system, the biometric certificate authority comprises a database for storing at least the biometric information and personal information about the customer; data extracting means for extracting personal information about the customer from the database when it has been confirmed that the customer is a person who has been registered with biometric-metric certificate authority; communication message generating means for, when the data extracting means has extracted personal information about the customer, generating a certificate certifying personal information about the customer and generating a communication message including the extracted data added with the certificate; and transmission means for transmitting means for transmitting the communication message to the terminal for requesting payment.

According to a fourth aspect of the electronic payment system of the present invention, a communication message added with an electronic signature is transmitted when the terminal for requesting payment requests the biometric certificate authority to confirm the authenticity of the customer or when the biometric certificate authority sends a certification notification or when the customer's money managing server transfers electronic money to the seller's money managing server.

According to a fifth aspect of the electronic payment system, the seller's electronic safe and the customer's electronic safe each have a sub-safe and a sub-safe controller with a key control part for unlocking the sub-safe with a sub-safe unlock key, storing and controlling the unlock key in the sub-safe, wherein the sub-safe stacks files in a hierarchical structure on a base file for storing electronic money, each file is given a specific unlock key and each file is unlocked only when the unlock key of the file agrees with a key of a person who tries to access the file.

According to a sixth aspect of the electronic payment system of the present invention, the terminal for requesting payment is one which is installed in a shop that actually sells the article.

According to a seventh aspect of the electronic payment system of the present invention, while a virtual mall server for selling articles on a communication line is installed, the terminal for requesting payment is a personal computer for requesting the virtual mall server to sell articles on the communication line.

According to an eighth aspect of the electronic payment system of the present invention, the electronic payment system further comprises a merchandise delivery system for delivering an article assigned for shipment to the customer in response to a shipping instruction from the virtual mall server when electronic payment is carried out by electronic money.

### BRIEF DESCRIPTION OF THE DRAWINGS

Fig. 1 is a block diagram showing the configuration of a first embodiment of the present invention;
Fig. 2 is a block diagram showing the configuration of an iris certificate authority according to the first embodiment of the present invention;
Fig. 3 is a block diagram showing the configuration of an electronic safe according to the first embodiment of the present invention;
Fig. 4 is a block diagram showing the configuration of a sub-safe according to the first embodiment of the present invention;
Fig. 5 is a flowchart showing the operation of an iris registration device according to a fifth embodiment of the present invention;
Fig. 6 is an explanatory diagram of a database for iris authentication according to the first embodiment of the present invention;
Fig. 7 is a flowchart showing the operation of a server in a shop according to the first embodiment of the present invention;
Figs. 8(A) and 8(B) are diagrams for explaining communication messages exchanged between a server in a shop and the iris certificate authority according to the first embodiment of the present invention;
Fig. 9 is a flowchart showing the operation of the iris certificate authority, when a customer is authenticated, according to the first embodiment of the present invention;
Fig. 10 is a diagram for explaining a communication message transmitted from a shop to the consumer server according to the first embodiment of the present invention;
Fig. 11 is a flowchart showing the operation of the consumer server according to the first embodiment of the present invention;
Figs. 12(A) and 12(B) are diagrams for explaining communication messages exchanged between the consumer server and the iris certificate authority according to the first embodiment of the present invention;
Fig. 13 is a flowchart showing the operation of the iris certificate authority, when a shop is authenticated, according to the first embodiment of the present invention;
Fig. 14 is a diagram for explaining the correspondence among a personal ID, iris data, and a wallet according to the first embodiment of the present invention;
Fig. 15 is a block diagram showing the configuration of a second embodiment of the present invention;
Fig. 16 is a perspective view of the external appearance of a personal computer in the second embodiment of the present invention;
Fig. 17 is a block diagram showing the configuration of a commodity delivery system according to the second embodiment of the present invention; and
Fig. 18 is a flowchart showing the operation of the second embodiment of the present invention.

### DESCRIPTION OF PREFERRED EMBODIMENTS

The preferred embodiments of the present invention will be described in the following.

### 〈Embodiment 1〉

A first embodiment of the present invention is an electronic payment system for electronic payment by using data on irises as biometric information peculiar to each customer, thus obviating the need for credit cards.

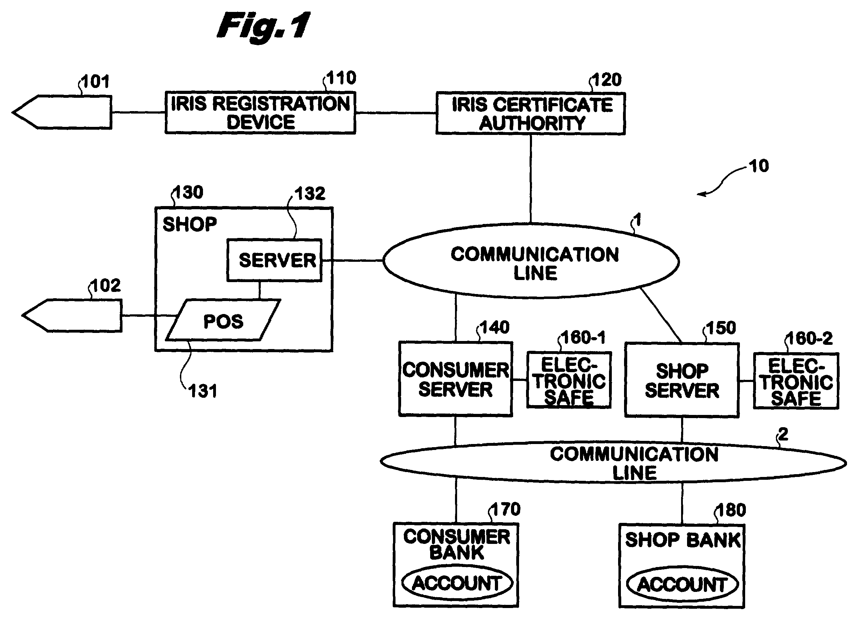

Fig. 1 is a block diagram showing the configuration of an electronic payment system 10 according to a first embodiment of the present invention. The electronic payment system 10 according to the present invention comprises an iris registration device 110. The iris registration device 110 is a unit for having iris data of customers registered in advance and is provided with a personal computer (not shown). The iris registration device 110 is connected to an iris authentication device 101.

The iris authentication device 101 is a biometric information-collecting unit that takes images of human eyes and provides iris data including iris images. The iris authentication device 101 is fitted with a camera (not shown).

The iris is a thin film lying between the cornea and the crystalline lens and has the pupil in its center. The iris controls the aperture of the pupil to adjust the amount of light going into the eyeball. The iris is completed in one's infancy and its pattern differs with different persons. The left eye and the right eye have different patterns, but they remain almost unchanged throughout one's lifetime. Therefore, information about the patterns of the irises is powerful biometric information peculiar to each person.

For the iris authentication device 101, an applied device of a technology introduced in "Iris Personal Identification System", Oki Denki Kenkyu Kaihatsu (Oki Electric R&D) 1997, July, No. 175, Vol. 64, for example, is used. The iris authentication device 101 is not limited to this example, but a smaller, less expensive system may be used.

In the first embodiment of the present invention, the size of iris data is 256 bytes long, for example.

A shop 130 is an ordinary shop where the customer actually makes purchases. In the shop 130, there is provided a system including a POS (Point of Sales) terminal 131, and a server 132 as a terminal for requesting payment by electronic money by controlling terminal units in the shop.

However, the shop 130 is not limited to this configuration, but various types of terminal devices may be installed according to the scale of the shop 130.

The POS 131 is connected to an iris authentication device 102, which is of the same structure as the iris authentication device 101.

An iris authentication device 120 is a biometric certificate authority that stores iris data of customers transmitted from the iris registration devices, and on receiving a request from a customer or the like, authenticates a customer by checking whether or not the customer is a very person registered in advance, based on iris data, and notifies a result by return.

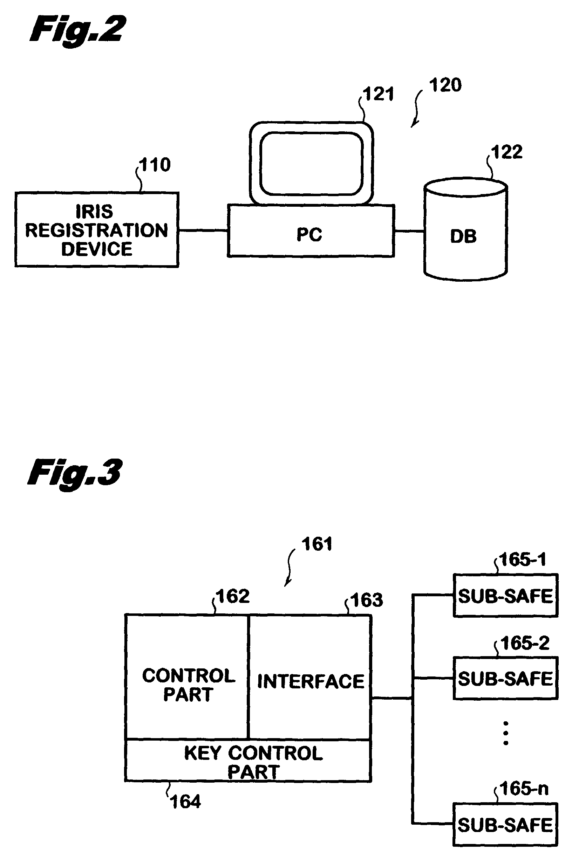

Fig. 2 is a block diagram showing the configuration of an iris certificate authority 120.

As shown in Fig. 2, the iris certificate authority 120 includes a PC (personal computer) 121 and a database (DB) 122 for storing data transferred from the iris registration device 110. The PC 121 forms data extracting means, communication message generating means and transmitting means. Note that this iris certificate authority 120 is only one as a rule.

Connected to a communication line 1 are the iris certificate authority 120, the server 132 in the shop 130, a consumer server 140, and a shop server 150, and the consumer server 140 and the shop server 150 are connected through a communication line 2 to a consumer bank 170 and a shop bank 180.

Note that for the communication procedure, SET (Secure Electronic Transaction) of the payment system of card firms may be used, but the processing steps are complicated and cannot be executed quickly. Therefore, t is preferable to use a general communication procedure that enables payment by electronic money on the Internet.

The consumer server 140 is a customer's money managing server for receiving and paying electronic money of the customer, and the consumer server 140 is connected to an electronic safe 160-1. The consumer server 140 performs a process of withdrawing electronic money from a deposit account of the consumer bank 170 and loading it to the electronic safe 160-1 for the customer before the customer make a purchase. Moreover, in response to an instruction from, for example, the shop 130, the consumer sever 140 also performs a process of withdrawing electronic money from a base file (to be described later) as a consumer wallet in the electronic safe (160-1).

The shop server 150 is a seller's money managing server for accumulating electronic money received for sales, and is connected to the seller's electronic safe 160-2.

Fig. 3 is a block diagram showing the configuration of an electronic safe 160-1 or 160-2. The sub-safes 165-1∼n are managed by a general controller 161 as a sub-safe controller.

The general controller 161 includes a control part 162, an interface 163 and a key control unit 164.

The control part 162 controls access to any of the sub-safes 165-1∼n. A sub-safe unlocking key to make access to the sub-safes 165-1∼n is stored in the key control part 164 with security ensured.

The sub-safes 165-1∼n are each formed of an IC silicon chip, for example, to prevent falsification or alteration of stored data.

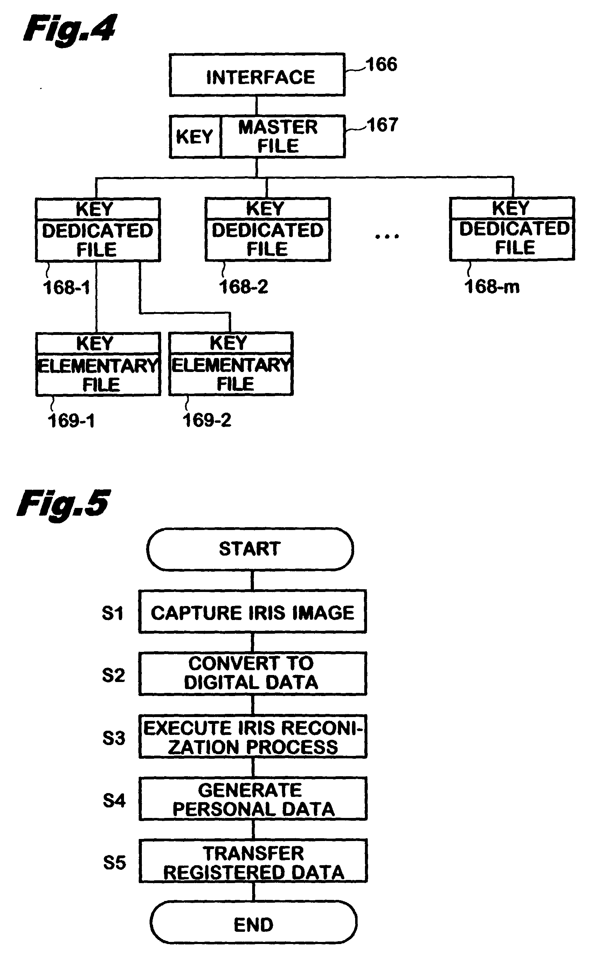

Fig. 4 is a block diagram showing the configuration of the sub-safes 165-1∼n.

The interface 166 is connected to the interface 163 of the general controller 161. Data can be exchanged only through the interface 163. The interface 166 is the same as an ordinary IC card, and therefore an IC card provided in ISO7816, for example.

The sub-safes 165-1∼n are each provided with personal files 168-1∼m, which are controlled by a master file 167. The master file 167 performs a function like a directory to make easy access to the personal files 168-1∼m. The keys of the files are formed such that an object file is unlocked with a key stored in the key control part 164. The personal files 168-1m are further personalized by the separate elementary files 169-1 and 169-2, and those elementary files 169-1 and 169-2 are used as personal wallets to store electronic money.

The consumer bank 170 and the shop bank 180 are ordinary financial institutions. The consumer bank 170 is a bank 2 with which the customers have accounts for payment, while the shop bank 180 performs a receiving process to put electronic money into the account of the shop 130 at the request of the shop server 150 to receive on deposit.

The consumer server 140 and the shop server may be provided one each or more than one each.

To make electronic payment, before making a purchase, it is necessary to remit electronic money from the consumer bank 170 to the consumer server 140 to load the money in the base file 169-1 or 169-2 of the electronic safe 160-1. The customer must have his iris data registered with the iris certificate authority 120.

The iris registration device 110 has iris data registered with the iris certificate authority 120.

Fig. 5 is a flowchart showing the operation of the iris registration device 110.

In Step 1 (S1 in Fig. 5), the iris authentication device 101 takes an image of an iris of a human being through its camera, obtains an iris image and stores the iris image in an image memory.

In Step 2, the image data of the image memory is converted into digital data. In Step 3, an iris recognition process is performed.

Thus, iris data 256 bytes long is formed and is registered as personal data.

In Step 4, iris data read by the iris authentication device 101 is entered. By operating the personal computer of the iris registration device 110, personal information is also entered, such as the address, name, date of birth of the registered person of iris data.

In Step 5, iris data and other information, which have been registered, are transferred to the iris certificate authority 120.

The transferred data is stored in the database 122 in the iris certificate authority 120.

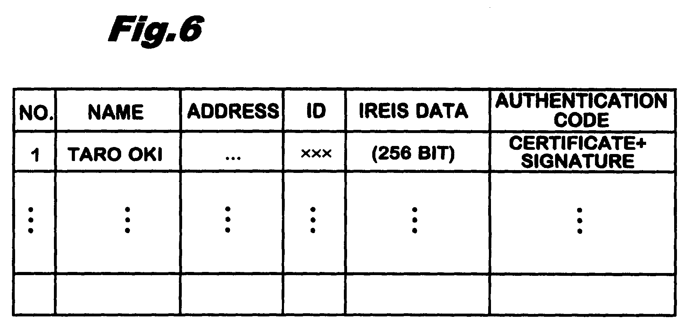

Fig. 6 is a diagram for explaining the database 122.

The database 122 contains the name, address, ID, iris data of each customer and his authentication code formed by adding an electric signature to the certificate.

As means for transferring data to the iris certificate authority 120, a portable media, such as an optical disk, or a communication line, such as LAN, may be used.

After iris data has been registered, when the customer make a purchase in the shop 130, payment is made by electronic money in the shop 130.

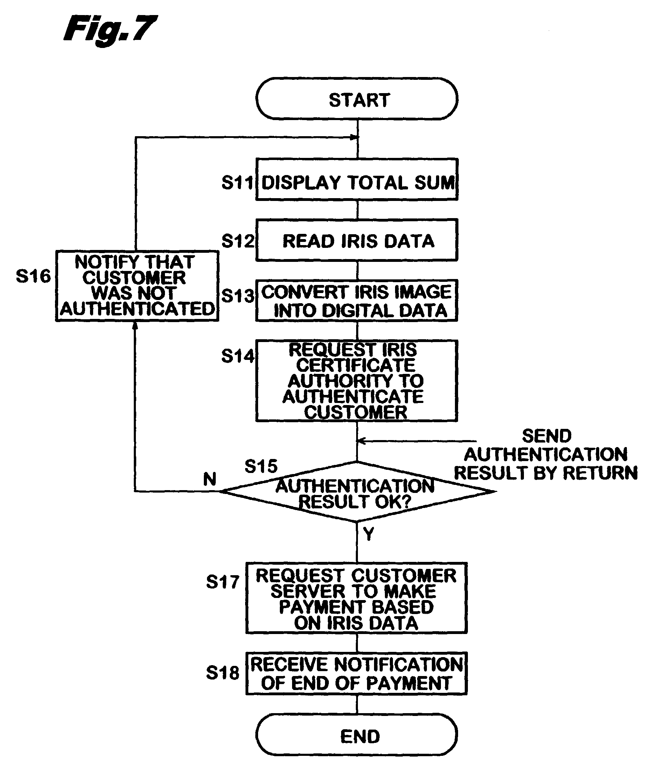

Fig. 7 is a flowchart showing the operation in the shop.

In Step 11, the POS 131 installed in the shop sums up purchase prices input at purchases of articles, and displays a total sum of money.

In Step 12, an iris image of the customer is taken with a camera mounted on the iris authentication device 102.

In Step 13, the POS 131 converts the image into digital data, recognizes the iris image, and forms 256-bit iris data from the iris image.

In Step 14, the server 132 transmits the formed iris data to the iris certificate authority 120 on the communication line 1, and requests that the customer be authenticated.

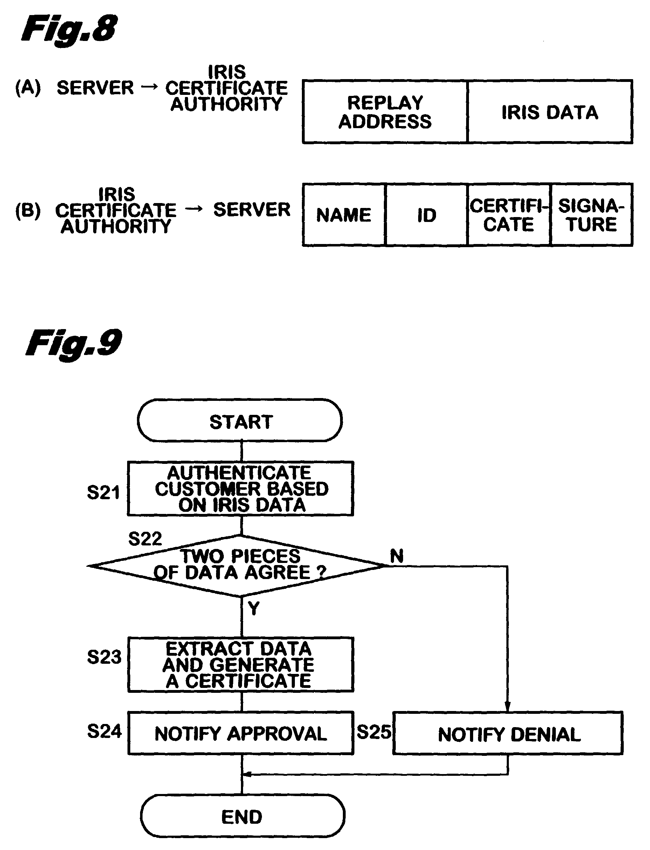

Figs. 8(A) and 8(B) are diagrams for explaining communication messages exchanged between the server 132 in the shop 130 and the iris certificate authority 120.

As shown in Fig. 8(A), a reply address of the server 132 as the reply destination as well as iris data is recorded in a communication message sent from the server 132 to the iris certificate authority 120.

The iris certificate authority 120 receives this communication message as a request for authentication, and checks the authenticity of the customer.

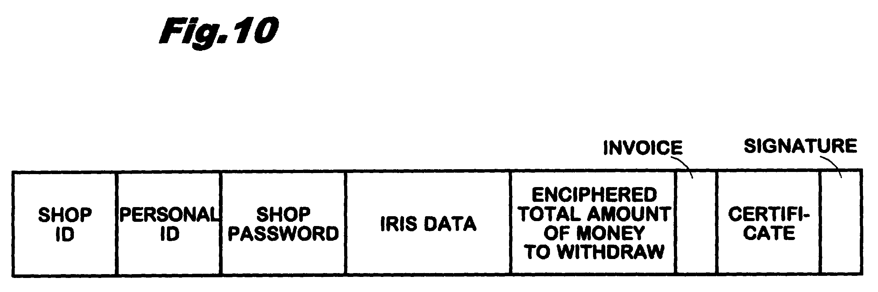

Fig. 9 is a flowchart showing the operation of the iris certificate authority 120.

In Step 21, the iris certificate authority 120 authenticates the customer based on iris data received and iris data registered in the database 122. In this authentication, a technology disclosed in U.S. Patent No. 5,291,560, for example, is used.

In Step 22, a decision is made whether or not two pieces of iris data coincide with each other.

When the two pieces of iris data agree, the authenticity of the customer is confirmed, the process proceeds to Step 23.

In Step 23, data of the customer concerned, such as his personal ID and name, is extracted from the database 122, and generates a certificate based on the data.

Note that to prevent falsification, an electronic signature, which is formed by an enciphering process using the RSA method, is added to the certificate.

As shown in Fig. 8(B), the name of the customer, ID, a certificate and the electronic signature affixed to the certificate are recorded on the communication message. This Step 23 corresponds to the processes by the data extracting means and the communication message generating means. In other words, the PC 121 executes Step 23.

In Step 24, the iris certificate authority 120 transmits by return a communication message in Fig. 8(B) as an approval notification to the server 132 of the shop 130 as the source of authentication request by using the reply address on the communication message. This Step 24 corresponds to the process by the transmission means. In other words, the PC 121 executes Step 24.

If the two iris data do not agree at Step 22, the process proceeds to Step 25 and the iris certificate authority 120 sends a denial notification that the customer was not authenticated to the server 132 of the shop 130 by return.

On receiving an approval or denial notification, the server 132 in the shop 130 executes Steps from Step 15 onwards in Fig. 7.

More specifically, in Step 15, a decision is made whether the notification transmitted by return is an approval notification or a denial notification.

If the decision is a denial notification, the process proceeds to Step 16, a notification to that effect is transmitted. If authentication of the customer is carried out again, Steps 11 to 14 are executed again.

If an approval notification is received in Step 15, the process proceeds to Step 17.

In Step 17, a communication message necessary for payment is generated, and this message is sent as a request for payment to the customer server 140.

Fig. 10 is a diagram for explaining a communication message when the message is sent to the customer server 140.

As shown in Fig. 10, the items recorded on a communication message are a shop ID, a customer's personal ID, a shop password, iris data of the customer, an enciphered total amount of money to withdraw, an invoice (bill) and a certificate issued by the iris certificate authority 120. The message is added with an electronic signature, by which security is enhanced. Note that for enciphering, either the secret-key cryptosystem or the public-key cryptosystem may be used.

The consumer server 140 receives the communication message, deciphers the ciphered total sum to withdraw, sets the sum of money, checks the deciphered total sum to withdraw by comparing it with the claimed sum on the invoice. If the two values agree, the consumer server 140 confirms that this amount claimed occurred by the customer's purchase of an article.

After making this confirmation, the consumer server 140 performs a payment process.

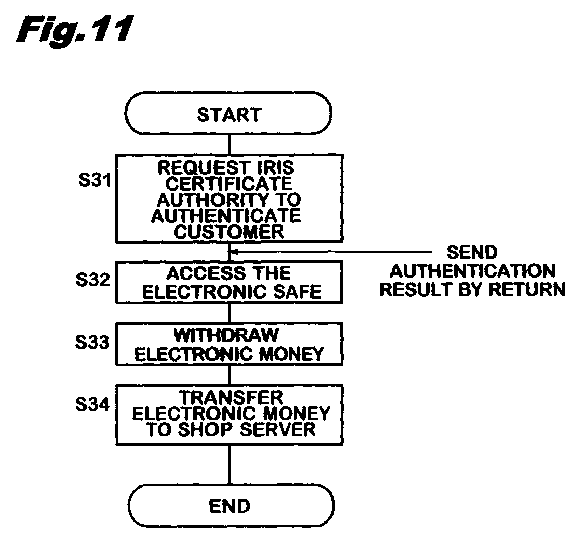

Fig. 11 is a flowchart showing the operation of the consumer server 140.

In Step 31, the consumer server 140 sends data to the iris certificate authority 120 to make a request to authenticate the shop 130. For authentication of the shop 130, it is necessary to have the ID and the password of the shop 130 registered in advance with the iris certificate authority like in the case of the customer.

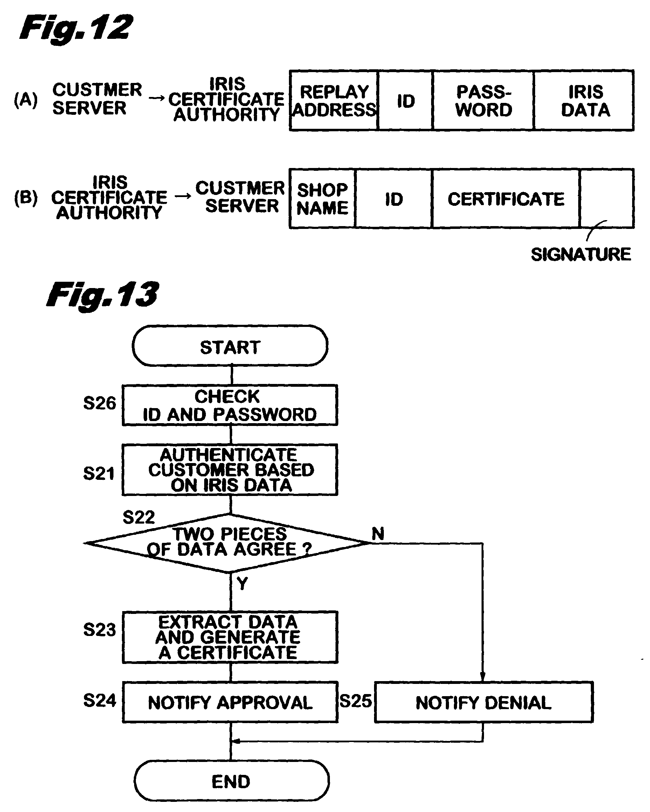

Figs. 12(A) and 12(B) are diagrams for explaining communication messages exchanged between the consumer server 140 and the iris certificate authority 120.

As shown in Fig. 12(A), the items recorded on a communication message are the reply address of the consumer server 140 as the reply destination, the ID and the password of the shop 130, and iris data of the customer.

The iris certificate authority 120 receives this communication message, and checks the authenticity of the customer and the shop 130.

Fig. 13 is a flowchart of the operation of the iris certificate authority 120. In Step 26, the iris certificate authority 120 checks the authenticity of the shop based on the ID and the password recorded on the communication message.

Thereafter, like in the flowchart in Fig. 9, the iris certificate authority 120 executes Steps 21 to 25, sends an authentication result to the consumer server 140 at the reply address recorded on the communication message received.

The items of data recorded on this communication message are the name and the ID of a shop, a certificate, and an electronic signature added to the certificate.

When the customer and the shop 130 have been authenticated, the process proceeds to Step 32 in Fig. 11.

In Step 32, the consumer server accesses a base file, for example, as a personal wallet of the electronic safe 160-1 according to the personal ID and iris data of the communication message.

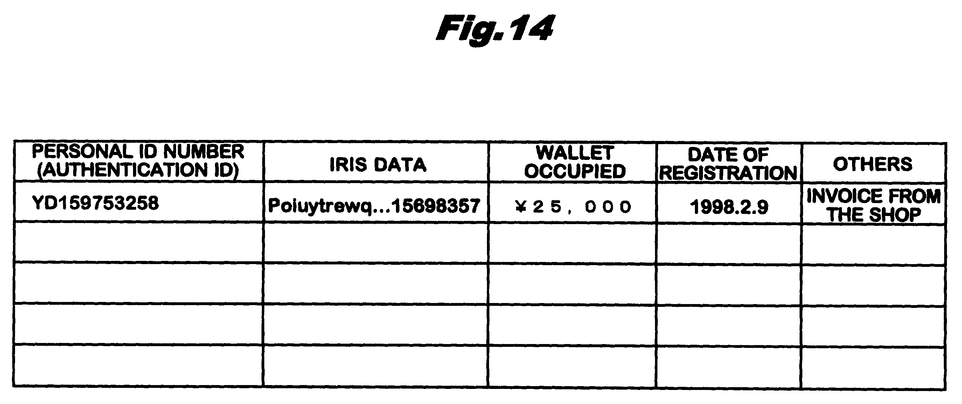

Fig. 14 is a diagram for explaining the correspondence among a personal ID, iris data, and a wallet.

The items registered on this correspondence table are a personal ID, iris data, a wallet occupied, registration date, and an invoice from the shop as other data.

In this case, a personal wallet is accessed based on a personal ID and iris data. However, the method of access is not limited to this, but the personal wallet may be accessed only by a personal ID or iris data added in the authentication process.

In Step 33, electronic money is withdrawn from a base file corresponding to a specified iris.

For example, to withdraw electronic money from the base file 169-1 of the sub-safe 165-1, the consumer server 140 first opens the master file 167 with a key, which has been stored in the key control part 164, takes out a key for the personal file 168-1, stored in the key control part 164, by referring to a directory of the master file 167, and opens the personal file 168-1. Then, the consumer server 140 opens the base file 169-1 and accesses the base file 169-1.

In Step 34, the consumer server 140 transfers withdrawn electronic money to the shop server 150.

The data recorded on a communication message at this time is data exclusive of iris data of the customer, in other words, the data includes electronic money corresponding to a cash price in cash transaction, a shop ID, a personal ID of the customer, a shop password, an enciphered withdrawn total sum, an invoice, a certificate issued by the iris certificate authority 120, and an electronic signature.

For the electronic money system as means for settling accounts in electronic commerce, there are two type: an IC card type chiefly intended for offline payment and a network type chiefly intended for online payment. Electronic money for transfer in this Step may be applied to both systems.

The shop server 150 receives electronic money, stores the money in the electronic safe 160-2 installed in the shop server 150, and sends a message that withdrawal of money has been completed to the server 132 in the shop 130.

In Step 18, the server 132 receives this message, with which electronic payment is completed.

When the shop server 150 requests the shop bank 180 to receive on deposit, electronic money, stored in the electronic safe 160-2, is transferred to an account of the shop bank 180.

As has been described, according the first embodiment, iris data of the customers, the shop ID's, etc. are previously registered with the iris certificate authority 120, and when payment is made, the iris certificate authority 120 is requested to authenticate the customer and the shop. This arrangement offers the following effects.

First, it becomes possible to make payment for purchases without using a credit card or the like, and it is not necessary for the customer to carry a card at all times.

In a shop, payment can be made quickly when one purchases something and therefore one need not do a double job, such as sending remittance by money order through a post office or a bank later. This means better convenience in shopping.

Because iris data peculiar to each person is used to check the authenticity of the customer, secure authentication becomes possible. Moreover, security is guaranteed and protection against fraud and counterfeit is ensured by a simple system.

By having iris data on offenders registered, crimes can be prevented.

Because the iris certificate authority 120 generates certificates regarding personal information of the customers and communication messages are formed added with an electronic signature, personal information can be prevented from being falsified. With the improved reliability of the payment procedure, people on the shop side can sell commodity with an increased sense of security.

The electronic safe 160-1 or 160-2 is divided into sub-safes 165-1∼n, and each sub-safe has the elementary files 169-1 and 169-2, which are used to store electronic money. By this arrangement, when electronic money is classified and used to settle an account, electronic money can be withdrawn quickly.

In the first embodiment, iris data has been used as biometric information. However, biometric information is not limited to this, but information about a signature, a retina, a voiceprint, looks, a fingerprint, or a handprint can be used. When information about a signature, a voiceprint, a fingerprint or a handprint is used, a biometric information acquisition device for one of those items is used. It ought to be noted, however, that iris data is more advantageous than a signature, a fingerprint and a voiceprint because iris data enables personal authentication with a relatively small amount of data of no more than 256 bytes.

In the first embodiment, description has been made of purchases of goods, but the first embodiment can be applied to payment for services.

### 〈Embodiment 2〉

A second embodied example of the present invention is an application to a virtual mall shopping system by iris data collected with a notebook-sized personal computer as a terminal for purchasing goods or a terminal for requesting payment.

The virtual mall shopping system is a system formed by participation of diverse shops.

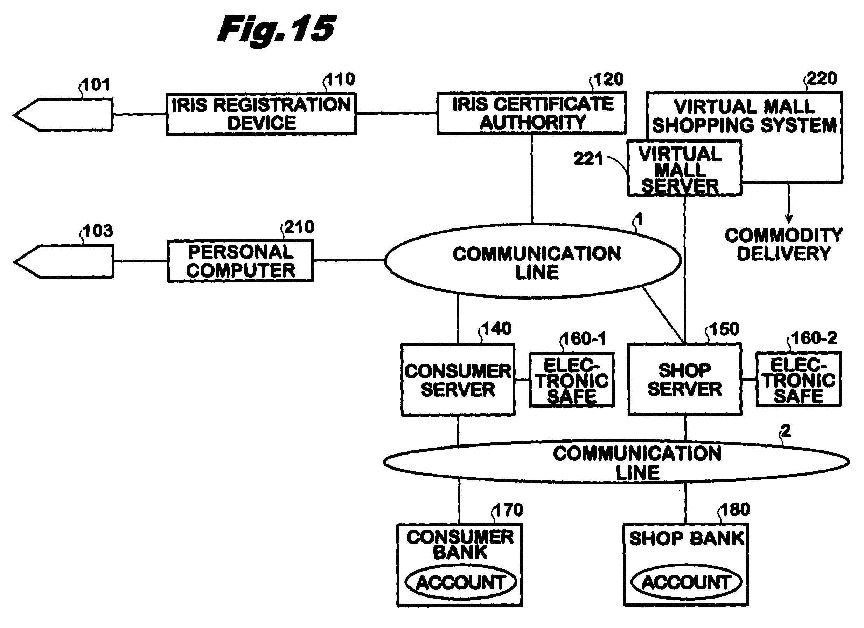

Fig. 15 is a block diagram showing the configuration of a second embodiment of the present invention.

A customer's personal computer 210 is connected to a communication line 1. The customer operates a personal computer 210 to access a virtual shopping mall system 220 through the communication line 1.

A virtual mall server 221 is a server as a component part of the virtual mall shopping system 220. This virtual mall server 221 is not necessarily only one.

A personal computer 210 is a notebook-sized personal computer widely used, for example, in homes, offices, companies and so on, and serves as a terminal for requesting payment in the second embodiment.

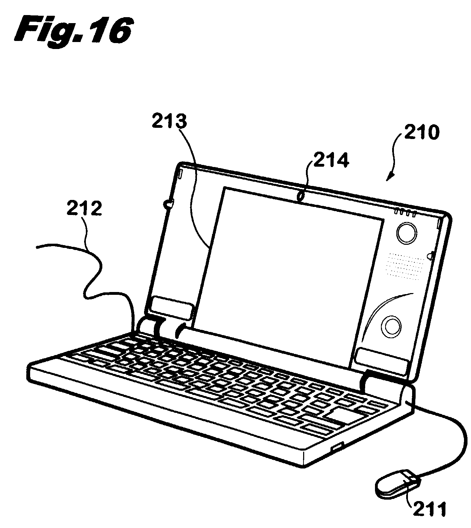

Fig. 16 is a perspective view of the external appearance of the personal computer 210.

As shown in Fig. 16, this personal computer 210 is connected to a mouse 211 for data input and a connecting line 212, and further connected through this connecting line 212 to the communication line 1, and communicable with terminals around the world through the Internet.

The personal computer 210 incorporates an iris authentication device same as the iris authentication device 101 mentioned above, and a camera 214, which collects iris images of persons who operate the personal computer 210, are mounted on top of a display 213 of the personal computer 210.

In the second embodiment, there is provided a commodity delivery system 230 to deliver commodity purchased through the virtual mall shopping system 220.

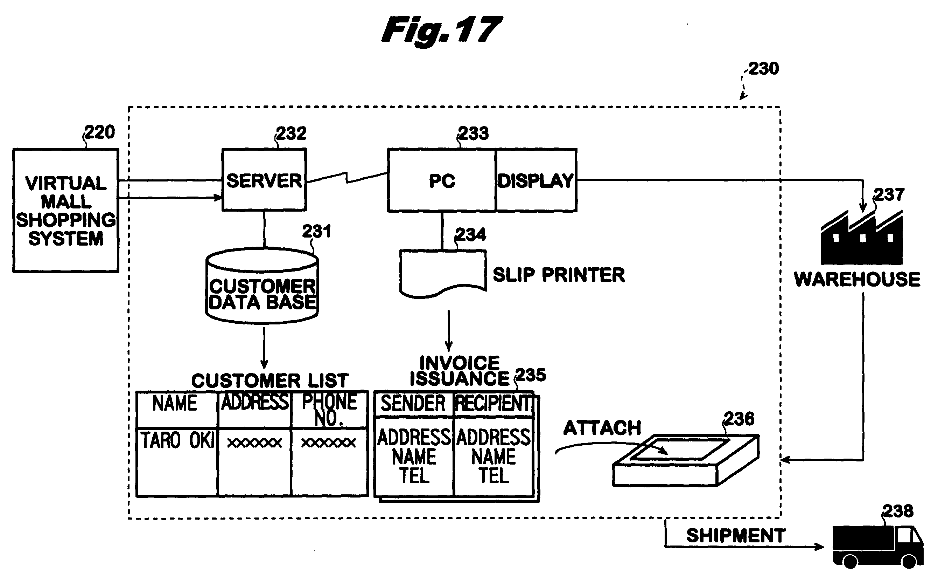

Fig. 17 is a block diagram showing the configuration of the commodity delivery system 230 in the second embodiment.

As shown in Fig. 17, the commodity delivery system 230 includes a customer database 231, a server 232, a PC 233, and a slip printer 234.

The items of data registered in the customer database 231 are addresses, names, phone numbers, and so on as customer information of the virtual mall shopping system 220.

The server 232 is a computer that manages the customer database 231, and instructs the PC 233 to issue a slip in response to a shipping instruction from the virtual mall shopping system 220 (virtual mall server 221).

The PC 233 is a computer that issues an invoice of an article assigned for shipment in response to an instruction from the server 232.

The slip printer 234 is a printer that prints out an invoice in response to an instruction from the PC 233.

Note that the components identical with those of the first embodiment are designated by the same reference numerals and their descriptions are omitted.

The customer operates the personal computer 210 to access the virtual mall shopping system 220.

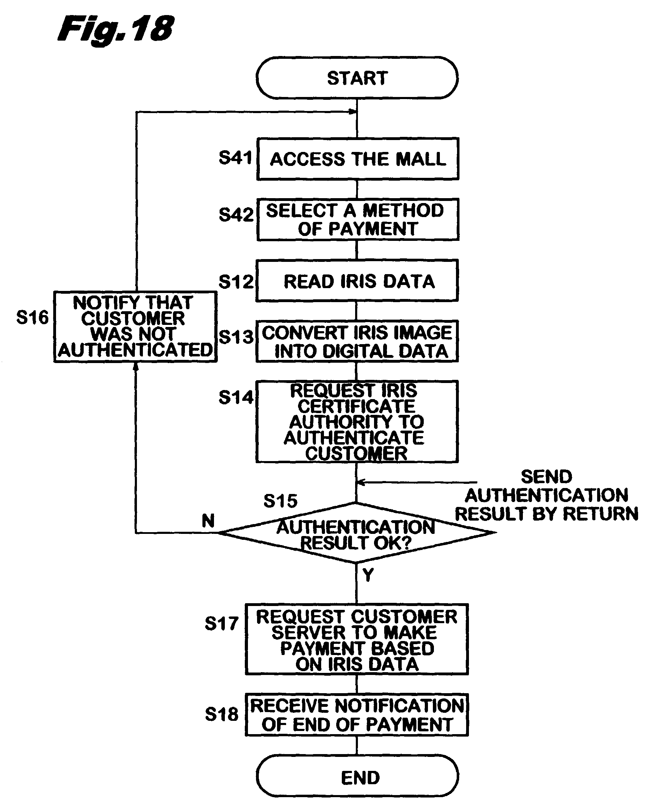

Fig. 18 is a flowchart showing the operation of the personal computer 210 in the second embodiment.

In Step 41, the personal computer 210 accesses the virtual mall server 221 through the communication line 1 via the Internet.

The display 213 of the personal computer 210, while using a browser, shows the virtual mall shopping system 220 in the virtual mall server 221. The customer refers to this displayed image to check if there is an article he or she wants.

If there is the desired article, the customer selects the article by using the keyboard or the mouse 211 of the personal computer 210. This information is transmitted through the communication line 1 to the virtual mall server 221, and the virtual mall server 221 transmits by return an instruction to select payment by a credit card or electronic money.

In Step 42, in response to the above instruction, the display 213 shows methods of payment from which the customer should choose. According to the display, the customer selects a method of payment. When the customer selects payment by electronic money, the same process as in the first embodiment is executed.

In other words, iris data of the operator is obtained with the camera mounted on the display 213, and the authenticity of the operator is checked based on the iris data. When the authenticity of the operator has been confirmed, a request is sent which asks the consumer server 140 to make payment, and electronic payment is done by the consumer server 140.

The steps identical with those of the first embodiment are designated by the same codes and their detailed descriptions are omitted.

When electronic payment has been done, the commodity delivery system 230 delivers an article assigned for shipment to the customer.

In other words, as shown in Fig. 17, the virtual mall shopping system 220 transmits a shipping instruction indicating the customer and an article assigned for shipment to the server 232 of the commodity delivery system 230.

The server 232 retrieves customer information about the address, name, phone number and so on from the customer database 231, and transmits shipping information indicating an article assigned for shipment as well as customer information to the PC 233.

The PC 233 generates invoice data based on the shipping information, and shows the article assigned for shipment on the display, which is visually checked by a worker.

The invoice data is transferred to the slip printer 234 which prints out an invoice 235 based on the invoice data.

Meanwhile, the article assigned for shipment is brought out from a warehouse 237 by a worker or by a transfer machine, and is packed up.

An invoice printed by the slip printer 234 is attached to the front surface of the package 236 of the article and this package is dispatched on a delivery truck 238.

As has been described, according to the second embodiment, the personal computer 210 is provided with the iris authentication device 103, which is used to check the authenticity of the customer when purchasing, for example, an article in the virtual mall shopping system 220 from the personal computer 210. Therefore, it becomes possible for the customer to make a payment when the customer make a purchase from the virtual mall shopping system 220 without using a credit card or the like. The customer does not need to carry a card to do virtual mall shopping.

As in the first embodiment, the authenticity of the customer is checked by iris data peculiar to the customer, so that security can be ensured by a simple system.

Moreover, if a commodity delivery system 230 is added to the electronic payment system, everything from receiving an order to delivery of a purchased article can be carried out in one comprehensive procedure. Therefore, a system with greater convenience and higher security can be established.

Because a notebook-sized personal computer 210 is adopted, the customer can purchase an article not only at home but also from a place outside home and can have services supplied and make payments for goods and services through the Internet.

Though a notebook-sized personal computer is adopted in the second embodiment, the present invention is not limited to this type of computer but a consumer server installed in a company, for example, can be applied. In this case, the consumer server can be used as means for making purchases and payments for daily necessities for the company, which obviates the need for the company to settle accounts later and contributes to better work efficiency. It also becomes possible to carry out electronic commerce of a small-size B-to-B (business to business) version.

Furthermore, as the customer terminal, a kiosk terminal installed in a convenience store and an automatic ticket bending machine installed in an event hall can be used. If this is put into practice, it becomes possible to make electronic payments when one buys things in a convenience store or buys a ticket at an event hall. This system may be employed in a wide range of applications.

## Claims

1. An electronic payment system between a seller and a customer to settle an account regarding a purchase price for an article on a communication line, comprising:
a biometric certificate authority where biometric information about said customer has been stored;
a terminal for requesting payment for asking said customer for payment in electronic money as a purchase price for said article;
a seller's money managing server for storing said seller's electronic money in an electronic safe for said seller and managing said electronic money; and
a customer's money managing server for storing said customer's electronic money and managing said electronic money,
wherein said terminal for requesting said biometric certificate authority to confirm the authenticity of said customer by submitting biometric information collected when said customer purchased said article and, on receiving a certification notification from the biometric certificate authority by return, requesting said customer's money managing server to remit electronic money as the purchase price to said seller's money managing server, wherein said biometric certificate authority, when receiving a request from the payment-requesting terminal to authenticate a customer, confirms the authenticity of the customer by checking whether or not the customer is a very person registered with said biometric certificate authority based on biometric information received and biometric information stored in advance and, after having confirmed that the customer is a person who has been registered with the biometric certificate authority, sends a certification notification to said payment-requesting terminal, and wherein said customer's money managing server, when receiving a request from said terminal for requesting payment to remit electronic money to said seller's money managing server, withdraws electronic money from said customer's electronic safe and transfers electronic money as the purchase price to said seller's money managing server.

2. An electronic payment system according to Claim 1, further comprising a biometric information acquisition unit for collecting biometric information about said customer and sending said information to said biometric certificate authority and said terminal for requesting payment.

3. An electronic payment system according to Claim 1, wherein said biometric certificate authority comprises:
a database for storing at least said biometric information and personal information about said customer;
data extracting means for extracting personal information about said customer from said database when it has been confirmed that the customer is a person who has been registered with biometric-metric certificate authority;
communication message generating means for, when said data extracting means has extracted personal information about said customer, generating a certificate certifying personal information about said customer and generating a communication message including said extracted data added with said certificate; and
transmission means for transmitting means for transmitting said communication message to said terminal for requesting payment.

4. An electronic payment system according to Claim 1, wherein a communication message added with an electronic signature is transmitted when said terminal for requesting payment requests said biometric certificate authority to confirm the authenticity of said customer or when said biometric certificate authority sends a certification notification or when said customer's money managing server transfers electronic money to said seller's money managing server.

5. An electronic payment system according to Claim 1, wherein said seller's electronic safe and said customer's electronic safe each have a sub-safe and a sub-safe control unit with a key controller for unlocking said sub-safe with a sub-safe unlock key, storing and controlling said unlock key in said sub-safe, wherein said sub-safe stacks files in a hierarchical structure on a base file for storing electronic money, each file is given a specific unlock key and each file is unlocked only when the unlock key of the file agrees with a key of a person who tries to access the file.

6. An electronic payment system according to Claim 1, wherein said terminal for requesting payment is one which is installed in a shop that actually sells the article.

7. An electronic payment system according to any of Claims 1 to 5, wherein while a virtual mall server for selling articles on a communication line is installed, said terminal for requesting payment is a personal computer for requesting said virtual mall server to sell articles on the communication line.

8. An electronic payment system according to Claim 7, further comprising a merchandise delivery system for delivering an article assigned for shipment to the customer in response to a shipping instruction from said virtual mall server when electronic payment is carried out by electronic money.

9. A method for operating an electronic payment system according to any one of claims 1 to 8.
